# DEMANDE DE BREVET EUROPEEN

(11) **EP 1 158 640 A1**
(43) Date de publication de la demande: **28.11.2001**
(21) Numéro de dépôt: 01410058.0
(22) Date de dépôt: 21.05.2001
(51) Int. Cl.: H02H 5/04, H02H 9/04

(54) **Dispositif de protection série pour une ligne de transmission de données ou d'énergie**

(30) Priorité: 23.05.2000 FR 0006573
(71) Demandeur: STMicroelectronics S.A., 92120 Montrouge (FR)
(72) Inventeur: Bremond, André, 37270 Veretz (FR); Merceron, Philippe, 37210 Vernon/Brenne (FR)
(74) Mandataire: de Beaumont, Michel

(57) **Abrégé**

L'invention concerne un dispositif de protection série contre un échauffement d'un élément de protection parallèle (3) d'un équipement d'une ligne téléphonique, comportant un élément de coupure (13) bidirectionnel, d'état normalement fermé et placé en série avec l'élément de protection parallèle, un élément (14) de détection de température, et un élément de commutation (15) propre à provoquer l'ouverture de l'élément de coupure quand la température détectée par l'élément de détection dépasse un seuil prédéterminé.

## Description

La présente invention concerne le domaine de la protection d'une charge recevant des signaux électriques d'une ligne susceptible de subir des perturbations, qu'il s'agisse d'une ligne de transmission d'énergie exclusivement, d'une ligne de transmission de données exclusivement, ou d'une ligne de transmission de données et d'énergie. La présente invention concerne plus particulièrement la protection d'une charge contre des surtensions issues de perturbations susceptibles d'être véhiculées par une ligne conductrice à laquelle elle est reliée.

Des dispositifs de protection de ce type se retrouvent, en particulier, dans les réseaux de télécommunication où des lignes conductrices relient des abonnés à des équipements collectifs de type central téléphonique. Dans un tel réseau, la ligne reliant l'abonné au central peut être soumise à, principalement, deux types de perturbations se traduisant par des surtensions. Un premier type de perturbations, dites brèves, concerne les phénomènes atmosphériques tels que la foudre qui est susceptible de frapper les lignes téléphoniques aériennes. Les surtensions de type atmosphérique sont de durée relativement brève (quelques centaines de microsecondes) et présentent un fort courant (quelques dizaines d'ampères). Un deuxième type de perturbations, dites durables, concerne les risques pour la ligne de véhiculer un courant provenant du réseau de distribution d'énergie (le secteur à 50 ou 60 Hz). Ces perturbations peuvent provenir d'un contact direct avec le secteur, ou de phénomènes d'induction si la ligne téléphonique basse tension est placée à proximité d'un conducteur secteur haute tension. Les surtensions de type secteur sont de durée relativement longue (pouvant atteindre plusieurs minutes) et sont également susceptibles d'atteindre des courants efficaces de quelques dizaines d'ampères.

Les équipements reliés aux lignes téléphoniques (poste d'abonné ou central téléphonique) sont habituellement pourvus de dispositifs de protection visant à éviter leur destruction à l'apparition de telles surtensions.

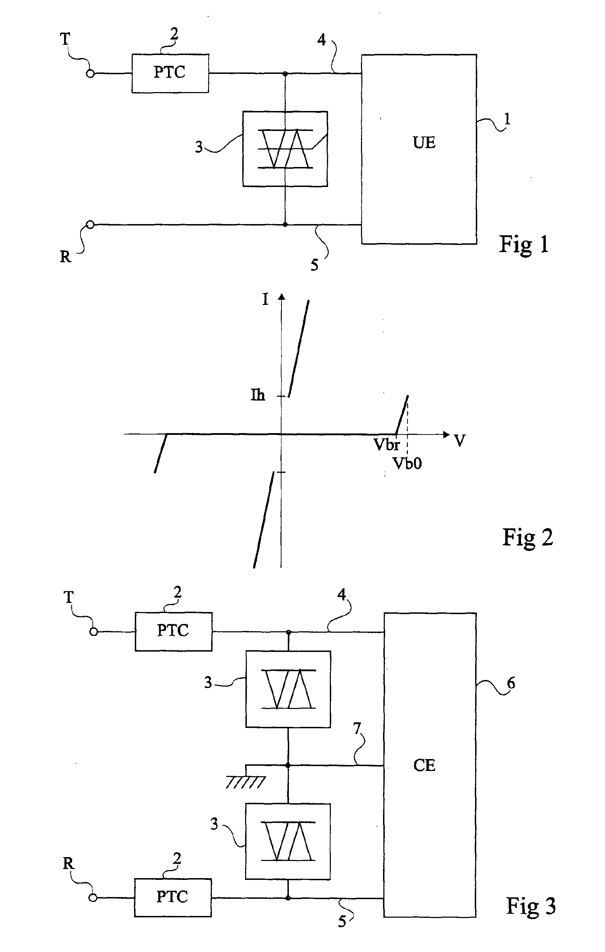

La figure 1 représente, de façon très schématique, un exemple classique de dispositif de protection d'un équipement utilisateur (UE) 1, par exemple un poste d'abonné téléphonique. Ce dispositif se répartit en un dispositif (PTC) 2 de protection de type série et un dispositif 3 de protection de type parallèle. Le dispositif de protection série est relié entre un premier conducteur T de la ligne téléphonique et une borne 4 d'accès à l'équipement utilisateur, le plus près possible de cet équipement. Le dispositif 3 de protection parallèle est connecté entre des bornes 4 et 5 d'entrée de l'équipement utilisateur 1, la borne 5 étant, pour un équipement utilisateur, connectée directement à un deuxième conducteur R de la ligne téléphonique.

Le dispositif 3 de protection parallèle a principalement pour rôle d'assurer la protection contre les perturbations de type atmosphérique, c'est-à-dire de brève durée. Son rôle est de dériver le courant de la ligne en présence d'une surtension. Le dispositif 3 de protection parallèle est le plus souvent constitué d'un composant à retournement de type diode Schockley bidirectionnelle. Un tel composant est connu sous la dénomination commerciale Trisil et présente une caractéristique courant-tension du type de celle illustrée par la figure 2. Ce dispositif se présente comme un circuit ouvert tant que la tension V à ses bornes n'atteint pas une valeur seuil Vb0 quelle que soit sa polarité. Quand cette tension seuil est atteinte, le dispositif 3 devient un court-circuit permettant le passage d'un courant I écrêtant ainsi la tension aux bornes de la charge. La réouverture du dispositif 3 s'effectue lorsque le courant qui le traverse devient inférieur à un courant de maintien Ih.

Un tel dispositif est bien adapté à la protection contre des surtensions de courtes durées mais n'est pas capable de dissiper de la puissance pendant une durée de l'ordre de plusieurs minutes. C'est pourquoi on l'associe au dispositif de protection série 2. Ce dispositif 2 a un fonctionnement de résistance à coefficient de température positif, c'est-à-dire que plus le courant qui le traverse est important, plus ce dispositif s'échauffe et plus sa résistance augmente. Le dispositif 2 peut être dimensionné pour qu'à partir d'un certain seuil de courant, sa résistance soit telle qu'il isole la charge de la ligne. Par exemple, le dispositif 2 est un barreau en polymère chargé avec des particules conductrices. Lorsque le polymère se dilate, les particules conductrices qu'il contient se séparent les unes des autres, ce qui ouvre le circuit constitué par ce barreau protecteur.

Dans le cas où l'équipement à protéger est un équipement utilisateur dépourvu d'alimentation électrique autonome, celui-ci n'est pas raccordé à la terre et le dispositif de protection parallèle 3 est alors connecté entre les deux bornes d'entrée de lignes 4 et 5 comme l'illustre la figure 1.

Dans le cas où l'équipement à protéger est pourvu d'une connexion à la terre, comme c'est le cas par exemple d'un central téléphonique, le système de protection décrit en relation avec la figure 1 est dupliqué pour chaque conducteur de la ligne téléphonique.

Un exemple de système de protection de ce type est illustré par la figure 3. L'équipement à protéger est, par exemple, un équipement collectif (CE) 6 de type central téléphonique disposant d'une connexion 7 à la terre. Chaque conducteur T, R de la ligne téléphonique bifilaire est alors associé à un dispositif de protection série 2 (PTC). De plus, chaque borne d'entrée 4, 5 de l'équipement 6 est reliée, par un dispositif de protection de type parallèle 3, à la terre 7.

Un inconvénient des systèmes de protection classiques tels qu'exposés ci-dessus est que le courant d'une perturbation durable (par exemple, un courant induit par la proximité d'un conducteur raccordé au secteur) peut ne pas être suffisant pour déclencher le dispositif de protection de type série mais provoquer un échauffement du dispositif de protection parallèle.

En effet, comme le montre la figure 2 décrite précédemment, un dispositif de protection parallèle classique ne se déclenche que quand la tension à ses bornes a atteint sa tension seuil Vb0. Toutefois, avant le point de retournement, dans une zone entre une tension Vbr et la tension Vb0, le dispositif 3 commence par présenter une phase d'avalanche. Par conséquent, si le courant véhiculé par la ligne se trouve dans cette plage intermédiaire, le dispositif de protection parallèle va dissiper de la puissance et risque d'être détérioré.

Un autre inconvénient du système de protection classique est que, côté équipement collectif, la ligne téléphonique doit être équilibrée, c'est-à-dire que l'impédance série d'entrée à l'équipement doit être la même sur les deux conducteurs de ligne. Or, les composants de protection à coefficient de température positif généralement utilisés, qui présentent une résistance série au repos de l'ordre de 10 ohms, ont une tolérance de ± 20 %. Un déséquilibre entre les dispositifs de protection des deux conducteurs entraîne une dégradation des performances de l'équipement collectif.

Un autre inconvénient de ces solutions classiques est qu'elles ne sont pas intégrables.

La présente invention vise à proposer un dispositif de protection d'un équipement connecté à une ligne véhiculant un courant alternatif, qui soit déclenchable par la température, c'est-à-dire par un échauffement de l'équipement à protéger.

La présente invention vise plus particulièrement à proposer un nouveau dispositif de protection série contre les perturbations électriques durables, qui évite toute détérioration du composant de protection parallèle d'une ligne téléphonique contre les perturbations brèves.

L'invention vise, plus particulièrement, à proposer un dispositif de protection série qui soit déclenchable en température et intégrable.

L'invention vise également à proposer un dispositif réamorçable, c'est-à-dire réautorisant le passage du courant lorsque la température de l'équipement à protéger redescend en dessous d'une valeur seuil prédéterminée.

Pour atteindre ces objets, la présente invention prévoit un dispositif de protection série contre un échauffement d'un élément de protection parallèle d'un équipement d'une ligne téléphonique, comportant un élément de coupure bidirectionnel, d'état normalement fermé et placé en série avec l'élément de protection parallèle, un élément de détection de température, un élément de commutation propre à provoquer l'ouverture de l'élément de coupure quand la température détectée par l'élément de détection dépasse un seuil prédéterminé.

Selon un mode de réalisation de la présente invention, l'élément de commutation est un élément bidirectionnel normalement ouvert.

Selon un mode de réalisation de la présente invention, ledit élément de coupure est constitué de deux thyristors de coupure montés en antiparallèle et ayant chacun une résistance connectée entre ses deux gâchettes.

Selon un mode de réalisation de la présente invention, ledit élément de commutation est constitué de deux thyristors de commande, respectivement à gâchette de cathode et à gâchette d'anode, qui sont respectivement associés aux gâchettes d'anode et de cathode des thyristors de coupure.

Selon un mode de réalisation de la présente invention, chaque thyristor de l'élément de commutation a sa gâchette connectée à un point milieu d'un pont diviseur résistif dont un des éléments résistifs est constitué d'une thermistance à coefficient positif.

Selon un mode de réalisation de la présente invention, chaque thyristor de l'élément de commutation a sa gâchette connectée à un point milieu d'un pont diviseur résistif par l'intermédiaire d'une association de diodes en série.

Selon un mode de réalisation de la présente invention, une diode est intercalée entre le thyristor de commande à gâchette d'anode et la gâchette de cathode du thyristor de coupure auquel il est associé.

Selon un mode de réalisation de la présente invention, le dispositif est réalisé sous forme de circuit intégré.

Selon un mode de réalisation de la présente invention, l'élément de détection de température est intégré à l'élément de protection parallèle.

Selon un mode de réalisation de la présente invention, l'élément de détection de température détecte la température de l'élément de protection parallèle.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 qui ont été décrites précédemment sont destinées à exposer l'état de la technique et le problème posé ;
la figure 4 représente, de façon très schématique et simplifiée, un mode de réalisation d'un dispositif de protection selon l'invention, associé à un équipement à protéger ;
la figure 5 représente un schéma électrique d'un mode de réalisation d'un dispositif de protection selon la présente invention, appliqué à la protection d'une ligne téléphonique ;
la figure 6 représente une variante de réalisation d'un détecteur de température selon la présente invention ;
la figure 7 est un schéma électrique équivalent d'un dispositif de protection intégrable selon la présente invention ; et
la figure 8 représente un exemple de réalisation d'un circuit d'extraction de tensions d'alimentation continues positive et négative d'un dispositif de protection selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les détails constitutifs des équipements qu'un dispositif de protection de l'invention est destiné à protéger n'ont pas été mentionnés pour être parfaitement connus.

Une caractéristique de la présente invention est de prévoir, en série avec un élément de protection parallèle d'une ligne téléphonique à protéger, un élément de coupure bidirectionnel et ayant un état normalement fermé, et un élément de détection de température de l'élément de protection parallèle pour déclencher l'ouverture de l'élément de coupure au moyen d'un circuit de commande adapté. Selon un mode de réalisation préféré de l'invention, ce circuit de commande est constitué d'un élément de commutation bidirectionnel ayant un état normalement ouvert.

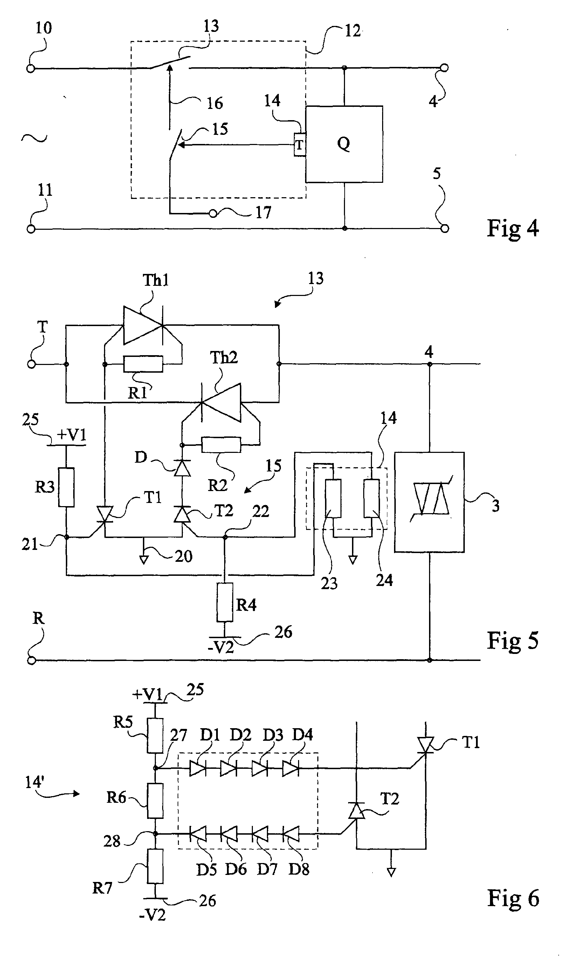

La figure 4 représente, de façon très schématique et simplifiée, un mode de réalisation d'un dispositif 12 de protection série selon la présente invention.

Comme précédemment, une charge Q à protéger, constituée d'un élément de protection parallèle, est alimentée par une tension alternative appliquée entre deux bornes 10, 11. Dans l'exemple de la figure 4, on considère que d'autres charges éventuelles peuvent être placées en parallèle avec la charge Q en aval des bornes 10 et 11. Par exemple, il pourra s'agir d'un équipement utilisateur (1, figure 1) connecté entre les bornes 4 et 5. La charge Q à protéger est alors constituée d'un circuit (3, figure 1) de protection parallèle.

Le dispositif 12 comprend essentiellement un élément de coupure 13, connecté en série avec la charge Q entre les bornes 10 et 11, et un élément 14 de détection de température de cette charge. L'élément 14 de détection de température (T) est, bien entendu, placé le plus près possible de la source thermique à détecter afin d'être capable de détecter avec un minimum d'inertie les variations de température qui lui sont imposées, en particulier, par le courant alternatif de la ligne d'alimentation. On notera que l'élément de détection de température détecte la température de la charge à protéger et non de sa ligne d'alimentation.

L'élément de coupure 13 est un commutateur bidirectionnel normalement fermé qui est destiné à être ouvert lorsque la température détectée par l'élément 14 dépasse un seuil prédéterminé. Dans le mode de réalisation préféré illustré par la figure 4, l'élément de coupure 13 n'est pas commandé directement par le détecteur 14 mais par un élément de commutation 15 intermédiaire. Cet élément 15 est alors également constitué d'un système de commutation bidirectionnel mais, dans ce cas, normalement ouvert. Les deux bornes de puissance de l'élément de commutation 15 sont reliées, respectivement, à une borne de commande 16 de l'élément de coupure 13 et à une borne 17 d'application d'au moins une basse tension de commande sensiblement fixe. Quand la température détectée par l'élément 14 excède la valeur seuil prédéterminée, la fermeture de l'élément 15 provoque alors l'ouverture de l'élément de coupure 13 et déconnecte la charge Q à protéger de l'alimentation alternative.

Parmi les contraintes que doivent respecter les différents constituants d'un dispositif de protection série de l'invention, on signalera plus particulièrement, la tenue en tension de l'élément de coupure 13, son caractère bidirectionnel et, en présence de l'élément de commutation 15, le caractère bidirectionnel de celui-ci.

Une autre caractéristique de la présente invention est que l'élément de coupure est réamorçable, c'est-à-dire qu'il se referme automatiquement quand la surchauffe détectée disparaît.

La figure 5 représente, de façon plus détaillée, un mode de réalisation préféré d'un dispositif de protection série selon l'invention. L'exemple de la figure 5 est appliqué à la protection d'une charge elle-même constituée d'un dispositif de protection parallèle. En l'occurrence, le schéma de la figure 5 est à rapprocher de celui de la figure 1 pour protéger un équipement utilisateur (non représenté en figure 5) raccordé à l'extrémité d'une ligne téléphonique (conducteurs T et R). L'élément 3 de protection parallèle est inchangé par rapport au schéma de la figure 1, à l'exception de la présence d'un élément 14 de détection de température selon l'invention. Lorsque le circuit est réalisé sous forme de circuit intégré, l'élément 14 de détection de température pourra être intégré avec l'élément de protection 3 de type Trisil.

L'élément de coupure 13 est ici constitué de deux thyristors Th1 et Th2 montés en antiparallèle entre les bornes T et 4 de liaison à l'équipement utilisateur. Les gâchettes d'anode et de cathode de chaque thyristor Th1, Th2 sont, selon l'invention, reliées par des résistances R1 et R2, respectivement. Les résistances R1 et R2 permettent de placer les thyristors Th1 et Th2 dans une configuration normalement fermée, c'est-à-dire que, en fonctionnement normal, dès qu'un faible courant circule dans la ligne, l'un des thyristors (selon le sens du courant) entre en conduction grâce à la polarisation opérée par la résistance R1 ou R2 correspondante.

L'étage de commande 15 est, selon le mode de réalisation préféré illustré par la figure 5, constitué de deux thyristors T1 et T2 respectivement affectés à chacun des thyristors Th1 et Th2 de l'élément 13. Le thyristor T1 est connecté, par son anode, à la gâchette d'anode du thyristor Th1 et, par sa cathode, à une borne 20 à un potentiel de référence, par exemple la masse. On notera qu'il ne s'agit pas de la terre. En effet, dans cette application et comme cela a été indiqué précédemment, l'équipement utilisateur n'étant pas raccordé à la terre, le potentiel de la borne 20 est un potentiel arbitrairement nul servant de masse à l'équipement utilisateur.

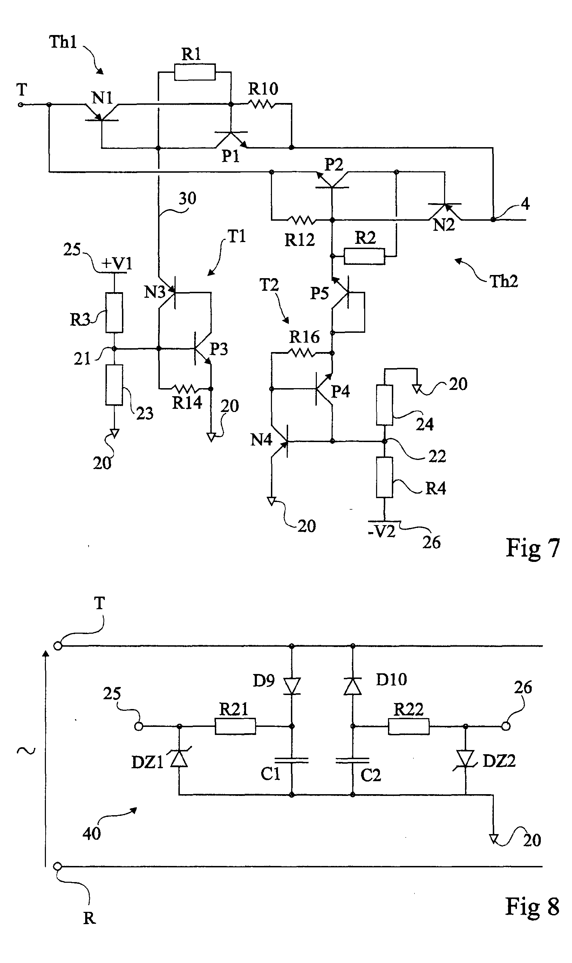

Le thyristor T2 est connecté, par son anode, à la borne 20 et, par sa cathode, à la gâchette de cathode du thyristor Th2. On notera que cette liaison à la gâchette de cathode du thyristor Th2 s'effectue par l'intermédiaire d'une diode D de protection. Le rôle de la diode D est d'éviter un amorçage intempestif du thyristor T2 pendant les alternances négatives des phases de fonctionnement normal et un amorçage intempestif du thyristor Th2 pendant les alternances positives des phases de protection, comme on le verra par la suite en relation avec la figure 7.

Dans le mode de réalisation de la figure 5, la gâchette de chaque thyristor T1, T2 est reliée au point milieu, respectivement 21, 22, d'un pont diviseur résistif constitué d'une association en série d'une résistance fixe, respectivement R3, R4, et d'une thermistance respectivement 23, 24.

On notera que le thyristor T1 est à gâchette de cathode alors que le thyristor T2 est à gâchette d'anode. Par conséquent, l'association en série de la résistance R3 avec la thermistance 23 est reliée entre une borne 25 d'application d'un potentiel sensiblement continu positif +V1 et la masse 20. L'association en série de la résistance R4 avec la thermistance 24 est reliée entre une borne 26 d'application d'un potentiel sensiblement continu négatif -V2 et la masse 20.

Dans le mode de réalisation de la figure 5, les thermistances 23 et 24 sont à coefficient de température positif, ce qui constitue un avantage en termes d'intégration et de disponibilité du produit sur le marché. Cela est rendu possible car on prévoit de fermer les thyristors T1 et T2 pour ouvrir le circuit de coupure 13.

Le fonctionnement du dispositif de protection illustré par la figure 5 est le suivant.

En fonctionnement normal, c'est-à-dire quand la température du circuit 3 de protection parallèle correspond à une température acceptable (par exemple, une température ambiante comprise entre - 25°C et + 70°C), les thyristors T1 et T2 sont en permanence bloqués. Par conséquent, les thyristors Th1 et Th2 conduisent respectivement à chaque alternance de la tension de ligne et la protection série est inactive. Les dimensionnements respectifs des composants sont choisis pour que, lors des alternances positives (en considérant que le thyristor Th1 doit conduire pendant les alternances positives), la tension du point 21 correspondant à la gâchette du thyristor T1 soit inférieure à la tension seuil d'amorçage du thyristor T1 (par exemple, 0,4 V). Par conséquent, on s'assure que le thyristor T1 est bloqué, ce qui permet de rendre passant le thyristor Th1 à chaque alternance positive dès qu'un courant passe dans la ligne. On notera qu'il suffit d'un faible courant (par exemple de l'ordre 1 milliampère) parfaitement compatible avec les courants transitant habituellement sur la ligne.

On notera également que la mise en oeuvre du dispositif de protection de l'invention requiert d'accepter une légère chute de tension (celle aux bornes de l'élément de coupure) en série avec la charge à protéger. Là encore, une telle chute de tension de l'ordre du volt est parfaitement compatible avec une application aux lignes téléphoniques.

Pour les alternances négatives, le thyristor Th2 est rendu passant au début de chaque alternance dans la mesure où le thyristor T2 reste bloqué, le pont résistif constitué de la résistance R4 et de la thermistance 24 étant dimensionné pour que la tension au point 22 reste inférieure à la tension seuil du thyristor T2.

Lorsqu'une perturbation brève (par exemple, de type foudre) apparaît sur la ligne, le dispositif de protection de l'invention n'intervient pas et le circuit 3 de protection parallèle remplit son rôle. En effet, celui-ci détecte la surtension sans s'échauffer suffisamment pour que la protection série de l'invention s'ouvre.

Par contre, en cas de perturbation relativement durable (par exemple, un contact prolongé avec la tension alternative secteur 50 ou 60 Hz), le circuit 3 de protection parallèle écrête la surtension et protège ainsi l'équipement connecté aux bornes 4 et 5. Au début de la perturbation, le dispositif de protection série de l'invention n'intervient pas dans la mesure où les thyristors Th1 et Th2 sont respectivement fermés à chaque début d'alternance de la perturbation. Dès que la température du circuit 3 s'élève, les valeurs respectives des thermistances 23 et 24 augmentent, ce qui entraîne une augmentation de la tension au point 21 et une diminution de la tension au point 22. Lorsque cette température atteint un seuil prédéfini (par exemple, de l'ordre de 150 à 200°C), les tensions aux points 21 et 22 deviennent égales aux tensions seuil respectives des thyristors T1 et T2. Ces thyristors se mettent donc à conduire pour dériver, vers la masse 20, les courants destinés à être, respectivement, injectés dans la gâchette du thyristor Th2 et extraits de la gâchette du thyristor Th1. Par conséquent, ces thyristors ne peuvent plus s'amorcer et l'élément de coupure 13 reste ouvert à chaque alternance. Le circuit 3 de protection parallèle se trouve alors déconnecté de la ligne et, par conséquent, protégé. La température diminue alors par disparition du courant dans le circuit 3. Quand la température redevient inférieure au seuil prédéfini, le fonctionnement normal réapparaît car les thyristors T1 et T2 sont de nouveau bloqués. Deux cas peuvent alors se présenter. Soit la perturbation a disparu et le système se remet à fonctionner dans son état normal. Soit la perturbation est toujours présente et le circuit de protection parallèle 3 va de nouveau s'échauffer et réactiver le dispositif de protection de l'invention. On notera que l'inertie thermique du système évite son oscillation.

On notera également que si l'invention nécessite deux tensions, respectivement positive et négative, pour polariser convenablement les thyristors T1 et T2 du circuit de commande, la fourniture de ces tensions ne pose généralement pas de problème. En particulier, celles-ci sont généralement présentes dans les équipements téléphoniques à protéger.

On notera également que les montages exposés en relation avec les figures 4 et 5 sont à rapprocher de ceux de la figure 1 de l'art antérieur. Pour une protection côté équipement collectif dans l'application à la téléphonie, un montage équivalent à celui de la figure 3 s'obtient en dupliquant le montage de la figure 4 ou 5 en s'inspirant de la transposition du montage de la figure 1 à celui de la figure 3.

Un avantage de la présente invention est qu'elle permet d'obtenir la protection série d'un élément de circuit en fonction de la température de cet élément de circuit. En l'occurrence, dans l'application à la téléphonie, cet élément de circuit est lui-même un dispositif de protection.

Un autre avantage de la présente invention est que le dispositif de protection qu'elle propose est intégrable.

Du fonctionnement décrit ci-dessus, on voit bien que l'élément de détection de température est, selon ce mode de réalisation de l'invention, reporté en aval de la ligne par rapport au circuit classique où la résistance de protection série (ou le fusible) est placée sur la ligne. L'invention permet d'obtenir une meilleure protection contre tous les types de perturbation susceptibles de se produire sur la ligne. En particulier, il n'y a plus de risques de voir un élément de protection parallèle, donc l'équipement à protéger, être détérioré par une perturbation durable dans la mesure où l'élément de protection série joue ici pleinement son rôle.

La figure 6 représente un autre mode de réalisation d'un élément 14' de détection de température susceptible d'être utilisé dans le circuit de l'invention. Selon ce mode de réalisation, les thermistances (23, 24, figure 5) sont remplacées par des diodes en série, la chute de tension dans ces diodes variant en fonction de leur température de fonctionnement. Bien entendu, on choisira des diodes telles que la tension aux bornes de la série utilisée soit comprise dans la plage de fonctionnement du thyristor T2. Dans l'exemple de la figure 6, on suppose que le circuit 14' est constitué, pour le thyristor T1, de quatre diodes D1, D2, D3 et D4 en série. La cathode de la diode D4 est connectée à la gâchette du thyristor T1. L'anode de la diode D1 est reliée au point milieu 27 d'une association de résistances R5 et R6 en série entre une borne 25 d'application d'un potentiel +V1 et une borne 28. La borne 28 constitue le point milieu d'une association en série de la résistance R6 avec une résistance R7 entre le point 27 et une borne 26 d'application d'une tension négative -V2. Le point milieu 28 est connecté à la cathode d'une première diode D5 d'une association en série de diodes D5, D6, D7 et D8 associées au thyristor T2, l'anode de la diode D8 étant connectée à la gâchette de ce thyristor T2. Le reste du circuit est le même qu'en figure 5.

En fonctionnement normal, la température du circuit 3 de protection parallèle correspond à la température ambiante souhaitée de fonctionnement (par exemple, comprise entre - 25°C et + 70°C). Pour cette plage de températures, la tension au point 27 est inférieure à la chute de tension aux bornes de la série de diodes D1 à D4 (respectivement D5 à D8) majorée de la tension seuil du thyristor T1. Pour les alternances négatives, la tension au point 28 est inférieure à la chute de tension aux bornes des diodes D5 à D8 majorée de la tension seuil du thyristor T2.

La chute de tension aux bornes de la série des diodes D1 à D4 (respectivement D5 à D8) diminue avec l'augmentation de la température de l'élément 3 à protéger. Lorsque cette diminution devient telle que la tension du point 27 permet l'amorçage du thyristor T1, un courant traverse sa gâchette et le rend conducteur pour dériver le courant de la résistance R1. On retrouve alors le fonctionnement exposé en relation avec la figure 5.

La figure 7 représente le schéma équivalent, à base de transistors bipolaires, d'un dispositif de protection tel qu'illustré par la figure 5. Cette figure 7 permet d'illustrer plus précisément le fonctionnement du circuit de l'invention et, plus particulièrement, le rôle de la diode D en série avec le thyristor T2. Toutefois, on notera qu'il s'agit là d'un schéma équivalent et que, en pratique, le dispositif de protection de l'invention sera préférentiellement réalisé sous forme de circuit intégré et des transistors bipolaires tels qu'illustrés par la figure 7 auraient alors des régions communes pour la formation d'un thyristor.

Le thyristor Th1 est équivalent à un premier transistor N1 de type PNP dont l'émetteur est relié à la borne T, dont le collecteur est relié, par l'intermédiaire d'une résistance interne R10 à la borne 4. La base du transistor N1 est reliée au collecteur d'un deuxième transistor P1 de type NPN dont l'émetteur est relié à la borne 4 et dont la base est reliée au collecteur du transistor N1. Les bases respectives des transistors N1 et P1 constituent les gâchettes d'anode et de cathode entre lesquelles est reliée la résistance R1.

Le thyristor Th2 est équivalent à un premier transistor N2 de type PNP dont l'émetteur est connecté à la borne 4 et dont le collecteur est relié, par l'intermédiaire d'une résistance R12 à la borne T. La base du transistor N2 est connectée au collecteur d'un deuxième transistor P2 de type NPN dont l'émetteur est relié à la borne T et dont la base est reliée au collecteur du transistor N2. Les bases respectives des transistors P2 et N2 constituent les gâchettes de cathode et d'anode reliées l'une à l'autre par la résistance R2.

Le thyristor T1 est équivalent à un premier transistor N3 de type PNP dont l'émetteur est relié à la gâchette d'anode 30 du thyristor Th1 et dont le collecteur est relié, par l'intermédiaire d'une résistance R14, à la masse 20. La base du transistor N3 est reliée au collecteur d'un deuxième transistor P3 de type NPN dont l'émetteur est relié à la masse 20 et dont la base est reliée au collecteur du transistor N3. S'agissant d'un thyristor à gâchette de cathode, c'est la base du transistor P3 qui est reliée au point milieu 21 de l'association en série de la résistance R3 avec la thermistance 23, entre les bornes 25 et 20 respectivement d'application du potentiel +V1 et de masse.

Le thyristor T2 est équivalent à un premier transistor N4 de type PNP dont l'émetteur est connecté à la masse 20 et dont le collecteur est relié, par l'intermédiaire d'une résistance R16, à l'émetteur d'un deuxième transistor P4 de type NPN. Le collecteur du transistor P4 est relié à la base du transistor N4 et sa base est reliée au collecteur de ce transistor N4. S'agissant d'un thyristor à gâchette d'anode, c'est la base du transistor N4 qui est reliée au point milieu 22 de l'association en série de la résistance R4 avec la thermistance 24 entre les bornes 26 et 20 respectivement d'application du potentiel -V2 et de masse.

La diode D est ici constituée d'un transistor P5 de type NPN dont l'émetteur est relié à la gâchette de cathode du thyristor Th2 (la base du transistor P2) et dont le collecteur est relié à la cathode du thyristor T2 (l'émetteur du transistor P4). Pour être monté en diode, le transistor P5 a son collecteur et sa base reliés.

La présence de la diode D (transistor P5) permet d'éviter la conduction inopinée du thyristor T2, plus précisément, du transistor P4 par sa jonction base-collecteur.

On suppose que la température de fonctionnement du système est telle que les thyristors T1 et T2 doivent rester ouverts.

En présence d'une alternance positive, un courant circule dans le transistor N1 qui se trouve polarisé grâce à la résistance R10 en série avec la résistance R1. Dès le début de l'alternance (plus précisément dès que le courant circulant dans la résistance R1 devient suffisant pour rendre conducteur le transistor P1), le transistor P1 conduit également. Côté thyristor T1, celui-ci est bloqué dans la mesure où aucun courant de base ne peut être prélevé sur la base du transistor N3, le transistor P3 étant bloqué par la polarisation apportée par le point 21. Par conséquent, le thyristor Th1 conduit. Côté thyristor Th2, celui-ci est bloqué dans la mesure où la jonction base-émetteur du transistor P2 est polarisée en inverse. Par ailleurs, côté thyristor T2, la jonction base-émetteur du transistor P4 est polarisée en inverse, le potentiel fixé par le point 22 bloquant le transistor N4.

Pendant les alternances négatives, le thyristor Th1 est bloqué car la jonction base-émetteur du transistor N1 est polarisée en inverse. Côté thyristor T1, l'émetteur du transistor N3 qui est relié à la borne 4 par l'intermédiaire des résistances R1 et R10 en série a sa jonction base-émetteur polarisée en inverse. Le thyristor T1 est donc bloqué (indépendamment de la polarisation du point 21). En présence de la diode D (transistor P5), le thyristor T2 est passant grâce à la polarisation obtenue par les résistances R12 et R2.

On suppose maintenant que la température de fonctionnement du système est telle que les thyristors Th1 et Th2 doivent ne pas s'amorcer.

Les potentiels des points 21 et 22 sont, par le dimensionnement du dispositif, tels qu'un courant de base peut être, respectivement, injecté dans le transistor P3 et prélevé sur le transistor N4. Ainsi, le transistor N3 est rendu conducteur par la mise en conduction du transistor P3, et le transistor P4 est rendu conducteur par la mise en conduction du transistor N4. En raison de la position de la résistance R16 (donc du fait que le thyristor T2 est à gâchette de cathode), la condition ci-dessus n'est vraie que si la tension base-émetteur du transistor P4 est suffisante, c'est-à-dire notamment si le potentiel de l'émetteur du transistor P4 ne risque pas de devenir supérieur à la masse à la chute de tension près dans la résistance R16 et dans le transistor N4 à l'état passant. Or, en l'absence de la diode D (transistor P5), la présence de la résistance R12 du thyristor Th2 peut entraîner un tel potentiel supérieur lors des alternances positives. En présence de la diode D, celle-ci est polarisée en inverse lors des alternances positives et la condition de fonctionnement souhaitée est respectée.

Dans l'application de l'invention à la protection d'équipements utilisateur ou collectif de lignes téléphoniques, les tensions d'alimentation +V1 et -V2 sont généralement disponibles sur les cartes d'interface ou directement dans les équipements.

Dans le cas contraire, on pourra les générer à partir de la tension alternative, par exemple, au moyen d'un circuit tel qu'illustré par la figure 8. Dans l'exemple de la figure 8, on a référencé les bornes d'entrée d'application de l'alimentation alternative T et R comme dans le cas d'une ligne téléphonique. Un circuit 40 de génération de tensions de polarisation +V1 et -V2 est basé sur l'emploi de deux condensateurs C1, C2 associés chacun à une diode Zener DZ1, DZ2. Les diodes Zener DZ1 et DZ2 fixent les niveaux respectifs des tensions +V1 et -V2. La partie du circuit 40 servant à générer la tension positive +V1 comprend, depuis la borne T, une diode D9 de redressement dont l'anode est connectée à la borne T et dont la cathode est reliée à une première électrode du condensateur C1. Cette première électrode est connectée, par l'intermédiaire d'une résistance R21, à la cathode de la diode Zener DZ1 qui est reliée à la borne 25 de fourniture de la tension +V1. L'anode de la diode Zener DZ1 est reliée à la deuxième électrode du condensateur C1 et à la masse 20. Côté tension négative, la tension -V2 est prélevée sur la borne 26 correspondante à l'anode de la diode DZ2. Une diode de redressement D10 est reliée, par sa cathode, à la borne T. L'anode de la diode D10 est reliée à une première électrode d'un condensateur C2 dont la deuxième électrode est reliée à la borne 20 et à la cathode de la diode DZ2. La première électrode du condensateur C2 et l'anode de la diode DZ2 sont reliées l'une à l'autre par une résistance R22.

Le circuit de génération de la figure 8 constitue un moyen relativement simple d'obtenir deux tensions respectivement positive et négative servant au fonctionnement du dispositif de protection de l'invention. Toutefois, on notera que d'autres circuits de génération plus ou moins complexes pourront être utilisés en variante.

On notera que le recours à une alimentation continue à double polarité est rendu nécessaire par le thyristor T1 à gâchette d'anode sur lequel il faut tirer du courant.

Bien entendu, la présente invention est susceptible de diverses variantes et modifications qui apparaîtront à l'homme de l'art. En particulier, bien que l'invention ait été plus particulièrement décrite ci-dessus en relation avec une application à la protection de lignes téléphoniques, l'invention peut trouver d'autres applications. Cette application constitue néanmoins une application préférée en raison des avantages importants qu'elle apporte en protégeant un circuit de protection parallèle.

De plus, les dimensionnements respectifs des différents composants d'un dispositif de protection de l'invention sont à la portée de l'homme du métier à partir des indications fonctionnelles données ci-dessus et des plages de fonctionnement en température et tensions souhaitées.

Enfin, on notera que d'autres éléments de détection de température pourront être utilisés pourvu, dans le mode de réalisation préféré de l'invention, que ces éléments de détection engendrent une variation de tension correspondant à celle d'une résistance à coefficient positif.

## Revendications

1. Dispositif de protection série contre un échauffement d'un élément (3) de protection parallèle d'un équipement d'une ligne téléphonique, **caractérisé en ce qu'**il comporte :
- un élément de coupure (13) bidirectionnel, d'état normalement fermé et placé en série avec l'élément de protection parallèle ;
- un élément (14, 14') de détection de température ; et
- un élément de commutation (15) propre à provoquer l'ouverture de l'élément de coupure quand la température détectée par l'élément de détection dépasse un seuil prédéterminé.

2. Dispositif selon la revendication 1, **caractérisé en ce que** l'élément de commutation (15) est un élément bidirectionnel normalement ouvert.

3. Dispositif de protection selon la revendication 1 ou 2, **caractérisé en ce que** ledit élément de coupure (13) est constitué de deux thyristors de coupure (Th1, Th2) montés en antiparallèle et ayant chacun une résistance (R1, R2) connectée entre ses deux gâchettes.

4. Dispositif de protection selon la revendication 3, **caractérisé en ce que** ledit élément de commutation (15) est constitué de deux thyristors de commande, respectivement à gâchette de cathode (T1) et à gâchette d'anode (T2), qui sont respectivement associés aux gâchettes d'anode et de cathode des thyristors de coupure (Th1, Th2).

5. Dispositif de protection selon la revendication 4, **caractérisé en ce que** chaque thyristor (T1, T2) de l'élément de commutation (15) a sa gâchette connectée à un point milieu (21, 22) d'un pont diviseur résistif dont un des éléments résistifs est constitué d'une thermistance (23, 24) à coefficient positif.

6. Dispositif de protection selon la revendication 4, **caractérisé en ce que** chaque thyristor (T1, T2) de l'élément de commutation (15) a sa gâchette connectée à un point milieu (27, 28) d'un pont diviseur résistif (R5, R6, R7) par l'intermédiaire d'une association de diodes (D1, D2, D3, D4 ; D5, D6, D7, D8) en série.

7. Dispositif de protection selon l'une quelconque des revendications 4 à 6, **caractérisé en ce qu'**une diode (D) est intercalée entre le thyristor de commande à gâchette d'anode (T2) et la gâchette de cathode du thyristor de coupure (Th2) auquel il est associé.

8. Dispositif de protection selon l'une quelconque des revendications 1 à 7, **caractérisé en ce qu'**il est réalisé sous forme de circuit intégré.

9. Dispositif de protection selon l'une quelconque des revendications 1 à 8, **caractérisé en ce que** l'élément de détection de température (14, 14') détecte la température de l'élément (3) de protection parallèle.

10. Dispositif de protection selon l'une quelconque des revendications 1 à 9, **caractérisé en ce que** l'élément de détection de température (14, 14') est intégré à l'élément de protection parallèle (3).
